# EUROPEAN PATENT SPECIFICATION

(11) **EP 2 090 444 B1**
(45) Date of publication and mention of the grant of the patent: **23.11.2011**
(21) Application number: 07830386.4
(22) Date of filing: 23.10.2007
(51) Int. Cl.: B60C 13/00, B60C 13/02

(54) **TIRE**
REIFEN
PNEU

(30) Priority: 04.12.2006 JP 2006327166
(43) Date of publication of application: 19.08.2009
(73) Proprietor: Bridgestone Corporation, Tokyo 104-8340 (JP)
(72) Inventor: IWABUCHI, Soutarou, Kodaira-shi Tokyo 187-8531 (JP)
(74) Representative: Whalley, Kevin
(86) International application number: PCT/JP2007/070652
(87) International publication number: WO 2008/068969

(56) References cited:
- EP-A2- 1 260 387
- WO-A1-2006/098107
- JP-A- 8 282 216
- JP-A- 08 282 216
- JP-A- 10 067 208
- JP-A- 10 076 815
- JP-A- 10 081 115
- JP-A- 10 147 114
- JP-A- 10 297 222
- JP-A- 2006 256 432

## Description

### Technical Field

The present invention relates to a tire having a decoration region provided on at least one of a pair of sidewall surfaces, the decoration region including a pattern portion constituted of patterns and a mark portion constituted of marks and, in particular, to a tire having such a decoration region as described above where visibility of marks can be enhanced.

### Prior Art

There has been known a tire in which: a decoration region where marks are arranged is provided on a sidewall surface in order to indicate marks each constituted of letters or symbols such as a trademark, trade dress or the like of a tire; and each mark is distinguished from other portions of the decoration region by varied depths of ridges thereof (see JP-A 2003-182317). However, in this tire, no pattern is provided in the portions around the marks of the decoration region.

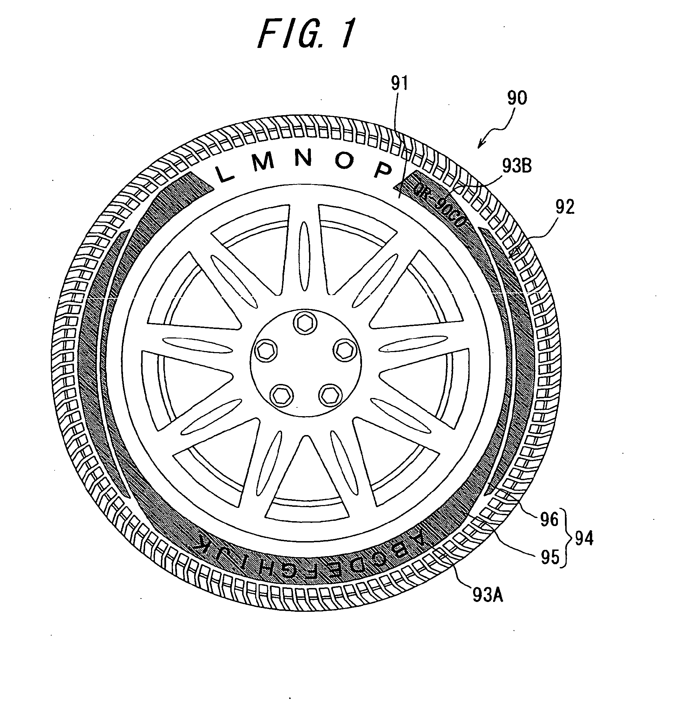

In view of this, there has been made an attempt to provide the portions other than a mark of a decoration region, with a pattern, in order to enhance design properties of the sidewall portion. Fig. 1 shows a side view exemplarily showing such a tire 90. A decoration region 92 is provided on the tire 90 at a sidewall surface 91 thereof by forming shallow notches at a part of an annular portion of the sidewall surface 91. In the decoration region 92, there are arranged mark portions 93A, 93B each constitutes a mark and a ridge portion 95 is combined with a flat-surface portion 96 in portions 94 around the marks portions 93A, 93B, so that the ridge portion and the flat-surface portion form patterns in the portions 94.

### Disclosure of the Invention

However, in the tire as shown in Fig. 1, a mark surrounded by a pattern portion constituted of ridges must have a flat surface and a mark surrounded by a pattern portion having a flat surface must have ridged surface because otherwise a boundary between the mark and the pattern surrounding the mark will be rendered obscure at least somewhere in the decoration region. Accordingly, there arises a first problem in the Fig. 1 tire in that it is quite difficult to provide a mark across a boundary between pattern portions of different surface types, whereby arrangement of a pattern is severely restricted. Further, there arises a second problem in that it is difficult to provide a mark with higher visibility than that of a pattern portion because the distinction of pattern types and the distinction of a mark from a pattern are both carried out simply on the basis of whether a surface is flat or has ridges thereon.

The present invention has been made in view of the problems described above. An object of the present invention is to provide a tire having a decoration region provided on at least one of a pair of sidewall surfaces, the decoration region including a pattern portion constituted of patterns and a mark portion constituted of marks, wherein the degree of freedom in arranging a mark is significantly enhanced and visibility of the mark, as compared with visibility of the pattern, can be significantly enhanced. Document JP 8282216 describes a pneumatic tire with ornament formed by many ridges. EP 1260387 describes a known tire sidewall.

### Means for solving the problems

In a first aspect <1> of the present invention, a tire having a decoration region provided on at least one of a pair of sidewall surfaces, the decoration region including a pattern portion constituted of patterns and a mark portion constituted of marks, is characterized in that:
the patterns of the pattern portion are formed by a first ridge group including a plurality of ridges extending in parallel to each other and a second ridge group including a plurality of ridges extending in parallel to each other along a direction different from the direction of the ridges of the first ridge group; and
among the marks of the mark portion, at least the mark having the widest extending width in the tire radial direction is formed by a flat surface in parallel to a sidewall surface or a plurality of said flat surfaces in combination such that the highest height of the flat surface/surfaces with respect to the sidewall surface level is higher than the highest height of the pattern portion.

In a second aspect <2> of the present invention, the tire of the first aspect <1> is characterized in that the pattern portion is constituted of a region where only the first ridge group exists and another region where the first ridge group and the second ridge group coexist.

In a third aspect <3> of the present invention, the tire of the first aspect <1> or the second aspect <2> is characterized in that, in each of the first ridge group and the second ridge group, the respective ridges in the group share the same highest height and the highest height of ridges of the second ridge group is not higher than the highest height of ridges of the first ridge group.

In a fourth aspect <4> of the present invention, the tire of the third aspect <3> is characterized in that a boundary, between the region where the first ridge group and the second ridge group coexist and the region where only the first ridge group exists, intersects with the mark having the widest extending width in the tire radial direction.

In a fifth aspect <5> of the present invention, the tire of any of the second to the fourth aspects <2>-<4> is characterized in that the mark portion of the decoration region is constituted of marks of plural types and at least one type of the marks, which is not the mark having the widest extending width in the tire radial direction, is formed by the region where the first ridge group and the second ridge group coexist.

In a sixth aspect <6> of the present invention, the tire of any of the second to the fifth aspects <2>-<5> is characterized in that the intersecting angle on the acute angle side formed between the ridges of the first ridge group and the ridges of the second ridge group in the region where the first ridge group and the second ridge group coexist is in the range of 45 to 90°.

In a seventh aspect <7> of the present invention, the tire of any of the first to the sixth aspects <1>-<6> is characterized in that a mark is also provided in a portion other than the decoration region of the sidewall surface.

In an eighth aspect <8> of the present invention, the tire of the seventh aspect <7> is characterized in that, given that the decoration region has a shape obtained by notching a portion of a ring in the circumferential direction and a mark arranged outside of the decoration region is referred to as an "out-of-region mark", the out-of-region mark is provided on a sidewall surface portion corresponding to the notched portion of the ring.

In a ninth aspect <9> of the present invention, the tire of any of the first to the eighth aspects <1>-<8> is characterized in that all of the marks provided at the sidewall surface, including the mark provided within the decoration region, are formed such that a mark having the wider extending width in the radial direction has the higher height with respect to the sidewall surface.

### Effect of the Invention

According to the first aspect <1> of the present invention, in the decoration region, the patterns of the pattern portion are formed by ridges and, among the marks of the mark portion, at least the mark having the widest extending width in the tire radial direction (i.e. the most important mark which should be the most distinctive among the marks) is constituted of a flat surface in parallel to a sidewall surface or a plurality of the flat surfaces in combination such that the highest height of the flat surface/surfaces with respect to the sidewall surface level is higher than the highest height of the pattern portion. Accordingly, the most important mark can be distinguished from the pattern portion in the two points that: the former is not formed by ridges; and the highest height of the former is significantly higher than the latter or the pattern portion, whereby the most important mark is clearly distinguished from the pattern portion and visibility of the most important mark can be enhanced. Further, the visibility of the most important mark is not affected wherever the most important mark is arranged in the pattern portion, whereby degree of freedom in arranging marks can be significantly enhanced. Yet further, since the pattern portion is formed as a combination of the first ridge group and the second ridge group, the design properties of the pattern portion can be improved.

According to the second aspect <2> of the present invention, the pattern portion is constituted of a region where only the first ridge group exists and another region where the first ridge group and the second ridge group coexist. As a result, the patterns of the pattern portion are formed by two regions which apparently differ from each other in visibility, whereby the design properties of the pattern portion can be further improved.

According to the third aspect of the present invention, since the highest height of ridges of the second ridge group is not higher than the highest height of ridges of the first ridge group, the design properties of the pattern portion can have good diversity.

According to the fourth aspect of the present invention, a boundary, between the region where the first ridge group and the second ridge group coexist and the region where only the first ridge group exists, intersects with the mark having the widest extending width in the tire radial direction. As a result, the sidewall portion can be designed to have three-dimensional visibility, whereby the sidewall portion can have appearance of luxury and high-quality.

According to the fifth aspect of the present invention, the mark portion of the decoration region is constituted of marks of plural types and at least one type of the marks, which is not the mark having the widest extending width in the tire radial direction, is formed by the region where the first ridge group and the second ridge group coexist. As a result, a mark which is less important than other marks can be formed by a structure similar to that of the pattern portion, whereby visibilities of other more important marks can be relatively enhanced.

According to the sixth aspect of the present invention, the intersecting angle on the acute angle side formed between the ridges of the first ridge group and the ridges of the second ridge group in the region where the first ridge group and the second ridge group coexist is in the range of 45 to 90°. As a result, the region where only the first ridge group exist can be more clearly distinguished from the region where the first ridge group and the second ridge group coexist, whereby the design properties of the pattern can be further improved.

According to the seventh aspect of the present invention, a mark is also provided in a portion other than the decoration region of the sidewall surface as an "out-of-region mark". As a result, this out-of-region mark can be distinguished from other marks within the decoration region so that the out-of-region mark has the highest visibility of the marks.

According to the eighth aspect of the present invention, the decoration region has a shape obtained by notching a portion of a ring in the circumferential direction and the out-of-region mark is provided on a sidewall surface portion corresponding to the notched portion of the ring. As a result, a mark and a pattern having different visibilities appear along the circumferential direction, whereby design properties of the sidewall surface can be improved.

According to the ninth aspect of the present invention, all of the marks provided at the sidewall surface, including the mark provided within the decoration region, are formed such that a mark having the wider extending width in the radial direction has the higher height with respect to the sidewall surface, whereby difference in visibility between plural marks can be further increased and the message conveying properties by a design at the sidewall surface can be further improved.

### Brief Description of the Drawings

Fig. 1 is a side view showing a conventional tire.
Fig. 2 is a side view showing a tire of an embodiment of the present invention.
Fig. 3 is a sectional view corresponding to the A-A section of Fig. 2.
Fig. 4 is a sectional view corresponding to the B-B section of Fig. 2.
Fig. 5 is a sectional view corresponding to the C-C section of Fig. 2.
Fig. 6 is a sectional view corresponding to the D-D section of Fig. 2.
Fig. 7 is a side view of a tire showing another example of arrangement of a decoration region.
Fig. 8 is a side view of a tire showing another example of arrangement of a decoration region.
Fig. 9 is a side view of a tire showing another example of arrangement of a decoration region.
Fig. 10 is a schematic view showing another form of ridges.
Fig. 11 is a schematic view showing a form of a mark having relatively low importance.
Explanation of the Reference Numerals.

- 1: Sidewall
- 2, 2A, 2B, 2C, 2D, 2E, 2F: Decoration region
- 3: Pattern portion
- 4: Mark portion
- 5A: Ridges of first ridge group
- 5B: Ridges of second ridge group
- 10: Tire
- 11: Background portion of pattern
- 12: Foreground portion of pattern
- 15A: First ridge group
- 15B: Second ridge group
- 19: Sidewall surface corresponding to a notched portion of a ring
- 21: Mark (out-of-region)
- 22: Mark (within-region)
- 22A: Flat surface of within-region mark
- 22B: Flat surface of within-region mark
- 23: Mark (within-region)
- 25: Flat surface in parallel to sidewall surface of out-of-region mark
- 26: Surface formed by ridges of out-of-region mark
- 27: Mark having the narrowest extending width in the tire radial direction

### Best Mode for carrying out the Invention

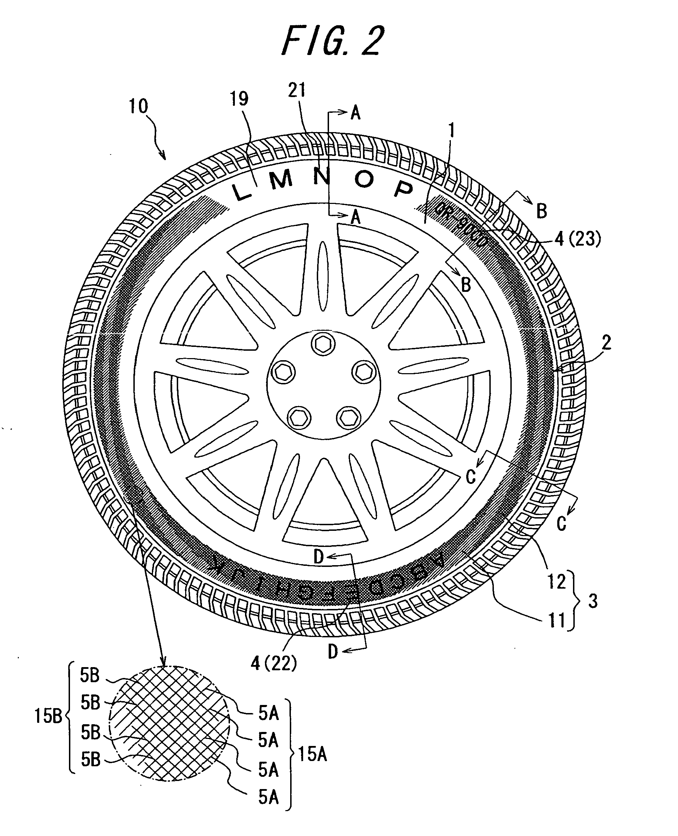

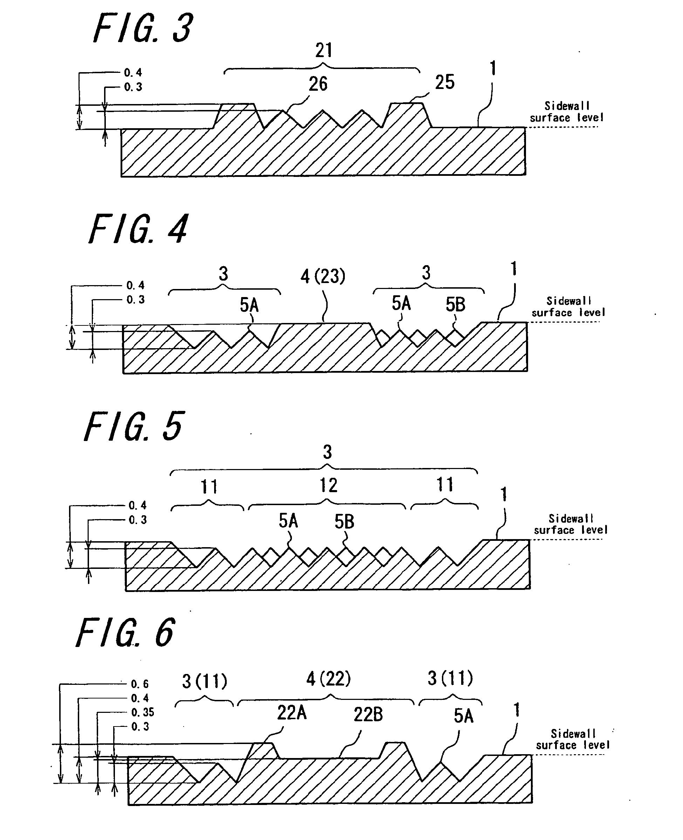

An embodiment of the present invention will be described with reference to the drawings. Fig. 2 is a side view showing a tire of the present invention. Figs. 3 to 6 are sectional views corresponding to the A-A section, B-B section, C-C section and D-D section of Fig. 2, respectively. In a tire 10, a decoration region 2 is provided at least one of sidewall surfaces 1 and the decoration region 2 includes a pattern portion 3 constituted of patterns and a mark portion 4 constituted of marks.

The numerical values shown in Figs. 3 to 6 represent the height in the tire thickness direction by mm unit. In the present specification, a "mark" represents a letter/letters or a symbol/symbols and a "pattern" represents a pattern design as a combination of plural portions having different visibilities.

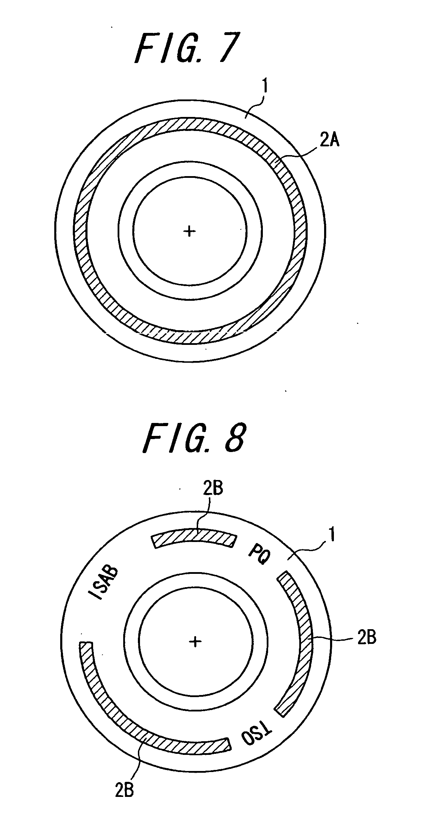

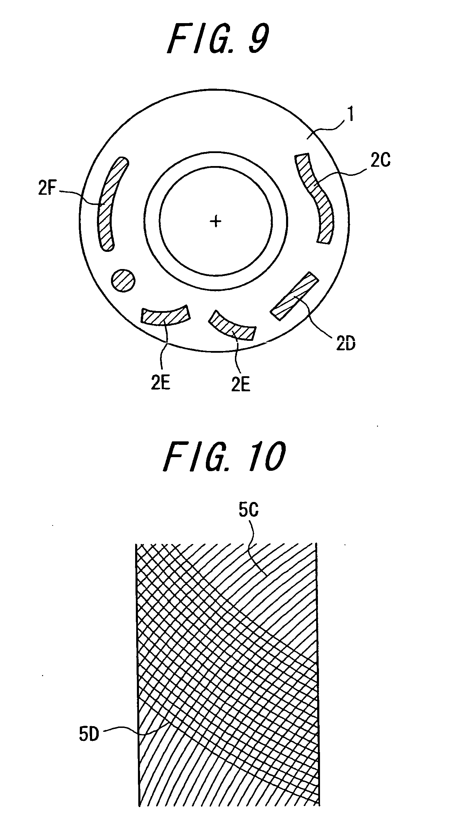

In the present embodiment, the decoration region 2 as shown in Fig. 2 has a shape obtained by notching in the circumferential direction a portion of a ring coaxial with the tire center axis. However, there is no particular restriction on the shape and the arrangement on the sidewall surface, of the decoration region 2. For example, the decoration region 2 may be an endless ring-like decoration region 2A formed at the sidewall surface 1, as shown in tire side view of Fig. 7. Alternatively, the decoration region 2 may be a decoration region 2B constituted of plural arcuate portions, as shown in a similar manner in Fig. 8. Further, the respective decoration regions may have a meandering belt-shaped structure like a decoration region 2C, a rectangular structure like a decoration region 2D, a structure inclined in the circumferential direction like a decoration region 2E or a structure having round end portions in the circumferential direction like a decoration region 2F as shown in Fig. 9. It should be noted that the internal structures of the decorations regions 2A, 2B, 2C, 2D, 2E, 2F are not shown in Figs. 7 to 9.

As shown in Fig. 2, the patterns of the pattern portion 3 in the decoration region 2 are formed by a first ridge group 15A including a plurality of ridges 5A extending in parallel to each other and a second ridge group 15B including a plurality of ridges 5B extending in parallel to each other along a direction different from the direction of the ridges 5A of the first ridge group 15A. In an example shown in Fig. 2, the pattern of the pattern portion 3 is constituted of a background portion 11 where only the ridges 5A of the first ridge group 15A exist and a foreground portion 12 where the ridges 5A of the first ridge group 15A and the ridges 5B of the second ridge group 15B coexist. In the foreground portion 12, the ridges 5A of the first ridge group 15A and the ridges 5B of the second ridge group 15B are designed such that the ridges 5A intersect the ridges 5B. The intersecting angle on the acute angle side formed between the ridges 5A and the ridges 5B is preferably in the range of 45 to 90° and more preferably in the range of 75 to 90° in terms of visibility of the patterns.

In the example as shown in Fig. 2, the mark portion 4 constituting a part of the decoration region 2 includes a mark 22 and a mark 23. The mark 22 and the mark 23 are formed by a flat surface in parallel to a sidewall surface 1 or a plurality of such flat surfaces in combination. For example, the mark 22 is formed by two flat surfaces 22A, 22B in parallel to the sidewall surface 1 and, in this example, the flat surface 22A functions as a brim surrounding the flat surface 22B. In contrast, the mark 23 is formed by a flat surface on the same plane as the sidewall surface 1.

The highest height of the mark portion 4 measured from the sidewall surface 1 is higher than the highest height of the pattern portion 3. As shown in Fig. 6, the highest height of the marks portion 4 is higher than the highest height of the pattern portion by 0.3 mm in the mark 22 and, as shown in Fig. 4, the highest height of the marks portion 4 is higher than the highest height of the pattern portion by 0.1 mm in the mark 23.

As described above, in the decoration region 2, the marks are distinguished from the patterns according to the two methods, i.e. judging the surface configurations and judging heights with respect to the sidewall surface, regardless of where the marks are arranged in the pattern portion. Accordingly, the visibilities of the marks 22, 23 can be enhanced and the degree of freedom in arranging a mark in the pattern portion can be enhanced, as well.

In the present embodiment, the highest height of the ridges 5B is preferably no higher than the highest height of the ridges 5A. By designing such that the ridges 5B are not higher than the ridges 5A, in any of the mark portions 4, the highest height thereof is higher than the highest height of the pattern portion 3, whereby the mark can be more clearly distinguished from the pattern due to difference in height therebetween.

For example, as shown in Figs. 4 and 5, the heights of the ridges 5A, 5B with respect to the sidewall surface level are -0.1mm and the depths of the ridges 5A, 5B are 0.3 mm, respectively.

The ridges 5A, 5B forming the patterns need not be linearly extending ridges and may be, for example, arcuately extending ridges 5C, 5D as shown in Fig. 10.

In the present embodiment, given that the marks 22, 23 within the decoration region 2 are referred to as "within-region" marks, it is preferable that a mark 21 is provided as an "out-of-region" mark at the sidewall surface 1 outside the decoration region 2. By doing this, the out-of-region mark 21 having visibility different from those of other marks 22, 23 can be provided, whereby it is possible to provide a larger number of marks than before, each having different importance, with different visibilities according to the importance thereof.

In general, a mark having the higher importance is allowed to have the wider extending width in the tire radial direction, which width is a representative characteristic of the dimension of the mark. Further, in the present embodiment, it is preferable that a mark having the wider extending width in the tire radial direction has the higher height measured from the sidewall surface. As a result, difference in visibility between marks can be made more obvious than otherwise.

In the present embodiment, the out-of-region mark 21 has the highest importance and thus is allowed to have the widest extending width in the tire radial direction. In contrast, the "within-region" mark 23 has the lowest importance and thus has the narrowest extending width in the tire radial direction. The order in height of the marks 21, 22, 23 corresponds to the order in wideness of the extending width in the tire radial direction thereof. The widest mark 21 has the highest height of 0.4 mm measured from the sidewall surface 1. The highest height of the mark 22 is 0.2 mm measured from the sidewall surface 1. The height of narrowest mark 23 is the same as the sidewall surface 1 and the lowest among the marks.

Further, it is preferable that the decoration region 2 is designed to have a shape obtained by notching a portion of a ring as shown in the drawings and that the out-of-region mark 21 is provided at the sidewall surface 19 corresponding to the notched portion of the ring. By arranging marks having different importance along the tire circumferential direction in such a manner, difference in visibility between the marks is made further clearer, whereby an effect to appeal to customers caused by the marks can be enhanced.

Yet further, as shown in Fig. 3, the out-of-region mark 21 may include not only the flat surface 25 in parallel to the sidewall surface but also a surface 26 formed by ridges.

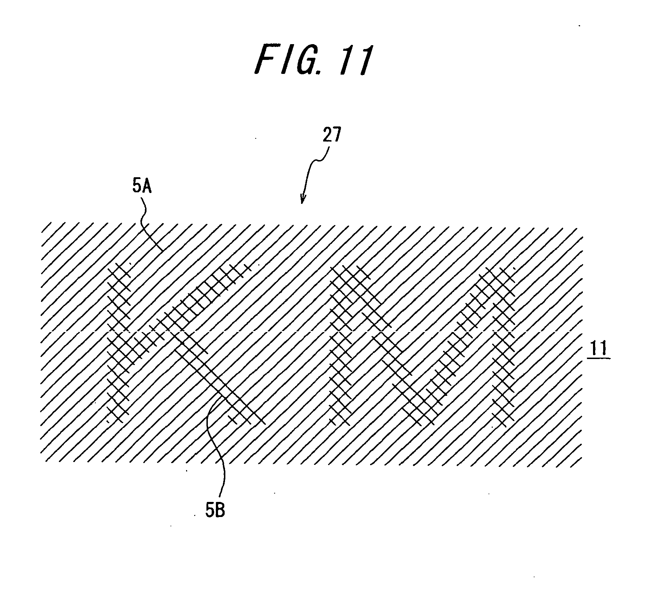

Yet further, as shown in Fig. 11, the mark 27 having the narrowest extension width in the tire radial direction (i.e. the mark having the lowest importance) among the marks provided at the sidewall surface may be formed by making the ridges 5A of the first ridge group 15A and the ridges 5B of the second ridge group 15B intersect each other. In this case, since the mark 27 can be distinguished from the background portion 11 constituted of only the first ridge group 15A, the mark 27 can be visually identified as a mark. Further, since the visibility of the mark 27 is substantially equal to that of the foreground portion 12 of the pattern portion 3 and thus different from the visibilities of other more important marks, the visibilities of other more important marks can be relatively enhanced.

### Industrial Applicability

The present invention can be suitably used for tires of various types and applications.

## Claims

1. A tire having a decoration region (2) provided on at least one of a pair of sidewall surfaces (1), the decoration region (2) including a pattern portion (3) constituted of patterns and a mark portion (4) constituted of marks, the patterns of the pattern portion (3) being formed by a first ridge group (15A) including a plurality of ridges (5A) extending in parallel to each other and a second ridge group (15B) including a plurality of ridges (5B) extending in parallel to each other along a direction different from the direction of the ridges (5A) of the first ridge group (15A);
**characterized in that**:
among the marks of the mark portion (4), at least the mark (22, 23) having the widest extending width in the tire radial direction is formed by a flat surface in parallel to a sidewall surface or a plurality of said flat surfaces (22A, 22B) in combination such that the highest height of the flat surface/surfaces (22A, 22B) with respect to the sidewall surface level is higher than the highest height of the pattern portion (3),
wherein the pattern portion (3) is constituted of a region where only the first ridge group (15A) exists and another region where the first ridge group (15A) and the second ridge group (15B) coexist; and
wherein a boundary, between the region where the first ridge group (15A) and the second ridge group (15B) coexist and the region where only the first ridge group exists (15A), intersects with said mark (22, 23) in the mark portion having the widest extending width in the tire radial direction.

2. The tire of claim 1, wherein, in each of the first ridge group (15A) and the second ridge group (15B), the respective ridges (5A, 5B) in the group share the same highest height and the highest height of ridges (5B) of the second ridge group (15B) is not higher than the highest height of ridges (5A) of the first ridge group (15A).

3. The tire of claim 1 or 2, wherein the mark portion (4) of the decoration region (2) is constituted of marks of plural types and at least one type of the marks, which is not the mark having the widest extending width in the tire radial direction, is formed by the region where the first ridge group (15A) and the second ridge group (15B) coexist.

4. The tire of any of claims 1 to 3, wherein the intersecting angle on the acute angle side formed between the ridges (5A) of the first ridge group (15A) and the ridges (5B) of the second ridge group (15B) in the region where the first ridge group (15A) and the second ridge group (15B) coexist is in the range of 45 to 90°.

5. The tire of any of claims 1 to 4, wherein a mark is also provided in a portion other than the decoration region (2) of the sidewall surface (1).

6. The tire of claim 5, wherein, given that the decoration region (2) has a shape obtained by notching a portion of a ring in the circumferential direction and a mark (21) arranged outside of the decoration region (2) is referred to as an "out-of-region mark", the out-of-region mark (21) is provided on a sidewall surface portion (19) corresponding to the notched portion of the ring.

7. The tire of any of claims 1 to 6, wherein all of the marks (21) provided at the sidewall surface, including the mark provided within the decoration region (22, 23), are formed such that a mark (21, 22, 23) having the wider extending width in the radial direction has the higher height with respect to the sidewall surface (1).

## Patentansprüche

1. Reifen, der einen Dekorationsbereich (2) hat, der auf wenigstens einer eines Paares von Seitenwandflächen (1) bereitgestellt wird, wobei der Dekorationsbereich (2) einen Musterabschnitt (3), der aus Mustern besteht, und einen Markierungsabschnitt (4), der aus Markierungen besteht, einschließt,
wobei die Muster des Musterabschnitts (3) gebildet werden durch eine erste Steggruppe (15A), die eine Vielzahl von Stegen (5A) einschließt, die sich parallel zueinander erstrecken, und eine zweite Steggruppe (15B), die eine Vielzahl von Stegen (5B) einschließt, die sich parallel zueinander in einer Richtung erstrecken, die sich von der Richtung der Stege (5A) der ersten Steggruppe (15A) unterscheidet,
**dadurch gekennzeichnet, dass**:
unter den Markierungen des Markierungsabschnitts (4) wenigstens die Markierung (22, 23), welche die breiteste Ausdehnungsbreite in der Reifenradialrichtung hat, durch eine ebene Fläche parallel zu einer Seitenwandfläche oder eine Vielzahl von ebenen Flächen (22A, 22B) in Kombination gebildet wird derart, dass die höchste Höhe der ebenen Fläche/Flächen (22A, 22B) in Bezug auf das Seitenwandflächen-Niveau höher ist als die höchste Höhe des Musterabschnitts (3),
wobei der Musterabschnitt (3) aus einem Bereich, in dem nur die erste Steggruppe (15A) vorhanden ist, und einem anderen Bereich, in dem die erste Steggruppe (15A) und die zweite Steggruppe (15B) gleichzeitig vorhanden sind, besteht, und
wobei sich eine Grenze zwischen dem Bereich, in dem die erste Steggruppe (15A) und die zweite Steggruppe (15B) gleichzeitig vorhanden sind, und dem Bereich, in dem nur die erste Steggruppe (15A) vorhanden ist, mit der Markierung (22, 23) in dem Markierungsabschnitt überschneidet, welche die breiteste Ausdehnungsbreite in der Reifenradialrichtung hat.

2. Reifen nach Anspruch 1, wobei sowohl in der ersten Steggruppe (15A) als auch in der zweiten Steggruppe (15B) die jeweiligen Stege (5A, 5B) die gleiche höchste Höhe teilen und die höchste Höhe der Stege (5B) der zweiten Steggruppe (15B) nicht höher ist als die höchste Höhe der Stege (5A) der ersten Steggruppe (15A).

3. Reifen nach Anspruch 1 oder 2, wobei der Markierungsabschnitt (4) des Dekorationsbereichs (2) aus Markierungen von mehreren Arten besteht und wenigstens eine Art der Markierungen, die nicht diejenige Markierung ist, welche die breiteste Ausdehnungsbreite in der Reifenradialrichtung hat, durch den Bereich gebildet wird, in dem die erste Steggruppe (15A) und die zweite Steggruppe (15B) gleichzeitig vorhanden sind.

4. Reifen nach einem der Ansprüche 1 bis 3, wobei der Überschneidungswinkel auf der spitzwinkligen Seite, der zwischen den Stegen (5A) der ersten Steggruppe (15A) und den Stegen (5B) der zweiten Steggruppe (15B) gebildet wird, in dem Bereich, in dem die erste Steggruppe (15A) und die zweite Steggruppe (15B) gleichzeitig vorhanden sind, in dem Bereich von 45 bis 90° liegt.

5. Reifen nach einem der Ansprüche 1 bis 4, wobei eine Markierung ebenfalls in einem anderen Abschnitt als dem Dekorationsbereich (2) der Seitenwandfläche (1) bereitgestellt wird.

6. Reifen nach Anspruch 5, wobei, vorausgesetzt, dass der Dekorationsbereich (2) eine Form hat, die gewonnen ist durch das Kerben eines Abschnitts eines Rings in einer umlaufenden Richtung, und eine Markierung (21), die außerhalb des Dekorationsbereichs (2) angeordnet ist, als eine "Außerbereichsmarkierung" bezeichnet wird, die Außerbereichsmarkierung (21) auf einem Seitenwandflächen-Abschnitt (19) bereitgestellt wird, der dem gekerbten Bereich des Rings entspricht.

7. Reifen nach einem der Ansprüche 1 bis 6, wobei alle Markierungen (21), die an der Seitenwandfläche bereitgestellt werden, einschließlich der Markierung (22, 23), die innerhalb des Dekorationsbereichs bereitgestellt wird, derart geformt sind, dass eine Markierung (21, 22, 23), welche die breitere Ausdehnungsbreite in der Radialrichtung hat, die höhere Höhe in Bezug auf die Seitenwandfläche (1) hat.

## Revendications

1. Bandage pneumatique, comportant une région de décoration (2) agencée sur au moins une surface de flanc d'une paire de surfaces de flanc (1), la région de décoration (2) englobant une partie de dessins (3) constituée de dessins, et une partie de marques (4) constituée de marques;
les dessins de la partie de dessins (3) étant formés par un premier groupe de nervures (15A), englobant plusieurs nervures (5A), s'étendant parallèlement les unes aux autres, et un deuxième groupe de nervures (15B), englobant plusieurs nervures (5B), s'étendant parallèlement les unes aux autres le long d'une direction différente de la direction des nervures (5A) du premier groupe de nervures (15A) ; **caractérisé en ce que**
parmi les marques de la partie de marques (4), au moins la marque (22, 23) ayant la largeur d'extension maximale dans la direction radiale du bandage pneumatique est formée par une surface plate parallèle à une surface de flanc, ou plusieurs desdites surfaces plates (22A, 22B) combinées, de sorte que la hauteur maximale de la surface plate/des surfaces plates (22A, 22B) par apport au niveau de la surface de flanc est supérieure à la hauteur maximale de la partie de dessins (3) ;
la partie de dessins (3) étant constituée par une région dans laquelle seul le premier groupe de nervures (15A) existe, et une autre région dans laquelle le premier groupe de nervures (15A) et le deuxième groupe de nervures (15A) coexistent ; et
dans lequel une limite, entre la région dans laquelle le premier groupe de nervures (15A) et le deuxième groupe de nervures (15B) coexistent et la région dans laquelle seul le premier group de nervures existe (15A), coupe ladite marque (22, 23) dans la partie de marques ayant la largeur d'extension maximale dans la direction radiale du bandage pneumatique.

2. Bandage pneumatique selon la revendication 1, dans lequel, dans chaque groupe, le premier groupe de nervures (15A) et le deuxième groupe de nervures (15B), les nervures respectives (5A, 5B) dans le groupe partagent la même hauteur maximale, la hauteur maximale des nervures (5B) du deuxième groupe de nervures (15B) n'étant pas supérieure à la hauteur maximale des nervures (5A) du premier groupe de nervures (15A).

3. Bandage pneumatique selon les revendications 1 ou 2, dans lequel la partie de marques (4) de la région de décoration (2) est constituée de marques de plusieurs types, au moins un type des marques, ne constituant pas la marque ayant la largeur d'extension maximale dans la direction radiale du bandage pneumatique, étant formé par la région dans laquelle le premier groupe de nervures (15A) et le deuxième groupe de nervures (15B) coexistent.

4. Bandage pneumatique selon l'une quelconque des revendications 1 à 3, dans lequel l'angle d'intersection sur le côté de l'angle aigu formé entre les nervures (5A) du premier groupe de nervures (15A) et les nervures (5B) du deuxième groupe de nervures (15B), dans la région dans laquelle le premier groupe de nervures (15A) et le deuxième groupe de nervures (15B) coexistent, est compris dans l'intervalle allant de 45 à 90°.

5. Bandage pneumatique selon l'une quelconque des revendications 1 à 4, dans lequel une marque est aussi formée dans une partie autre que la région de décoration (2) de la surface de flanc (1).

6. Bandage pneumatique selon la revendication 5, dans lequel, à condition que la région de décoration (2) ait une forme produite par entaillage d'une partie d'une bague dans la direction circonférentielle, et comporte une marque (21) formée à l'extérieur de la région de décoration (2), appelée une « marque hors de région », la marque hors de région (21) est formée sur une partie de surface de flanc (19) correspondant à la partie entaillée de la bague.

7. Bandage pneumatique selon l'une quelconque des revendications 1 à 6, dans lequel toutes les marques (21) formées au niveau de la surface de flanc, englobant la marque formée dans la région de décoration (22, 23), sont formées de sorte qu'une marque (21, 22, 23) ayant la largeur d'extension accrue dans la direction radiale, a une hauteur accrue par rapport à la surface de flanc (1).
